(19) Europäisches Patentamt
European Patent Office
Office européen des brevets

(11) **EP 1 873 960 B1**

(12) **EUROPEAN PATENT SPECIFICATION**

| | |
|---|---|
| (45) Date of publication and mention of the grant of the patent: **05.06.2013 Bulletin 2013/23** | (51) Int Cl.: **H04L 9/08** (2006.01) |

(21) Application number: **06013465.7**

(22) Date of filing: **29.06.2006**

(54) **Method for session key derivation in a IC card**

Verfahren zum Ableiten eines Sitzungsschlüssels auf einer IC-Karte

Procédé de dérivation d'une clé de séance sur une carte à circuit imprimé

(84) Designated Contracting States:
AT BE BG CH CY CZ DE DK EE ES FI FR GB GR HU IE IS IT LI LT LU LV MC NL PL PT RO SE SI SK TR

(43) Date of publication of application:
**02.01.2008 Bulletin 2008/01**

(73) Proprietor: **Incard SA**
**1204 Plan-Les-Ouates (Geneva) (CH)**

(72) Inventors:
• **Fontana, Giovanni**
**80100 Napoli (IT)**
• **Donatiello, Saverio**
**83013 Mercogliano (Avellino) (IT)**

(74) Representative: **Ferrari, Barbara**
**Botti & Ferrari S.r.l.**
**Via Cappellini, 11**
**20124 Milano (IT)**

(56) References cited:
• **MENEZES, OORSCHOT, VANSTONE: "Handbook of Applied Cryptography" HANDBOOK OF APPLIED CRYPTOGRAPHY, CRC PRESS SERIES ON DISCRETE MATHEMATICS AND ITS APPLICATIONS, 1997, pages 497-499, 567-569, 551-552, XP002454821 , BOCA RATON, FL, US ISBN: 0-8493-8523-7**

## Description

<u>Field of Application</u>

The present invention relates to a method for key session derivation during a mutual authentication between a master IC Card, storing a master key, and a user IC Card, storing a key-seed, the master IC Card and the user IC Card being connected through a communication interface for a communication session.

More particularly, the present invention relates to a method of the type indicated that is involved in the mutual authentication between the user IC Card and the master IC Card, a communication between such IC cards being authorized only if they both authenticates each other.

<u>Background of the Invention</u>

As it is well known, a method for IC card session key derivation is involved in an authentication method between a master and a user IC card, before starting a communication, in order to mutually guarantee that the master IC card is authorized to read a plurality of information stored in the user IC card. Similarly, the user IC card must be authorized to read a plurality of information stored in the master IC card before starting said communication.

More particularly, a method for IC cards session key derivation is used during an mutual authentication to guarantee an authentication between the master and the user IC Card interconnected and communicating through an interface terminal.

The master IC Card comprises at least a first memory unit storing a first plurality of data and the user IC Card comprises at least a second memory unit including a second plurality of data.

Generally, at least a portion of the first and the second plurality of data are secret and require to be protected, for example because they comprise sensitive data or information used in secure transactions of a banking application.

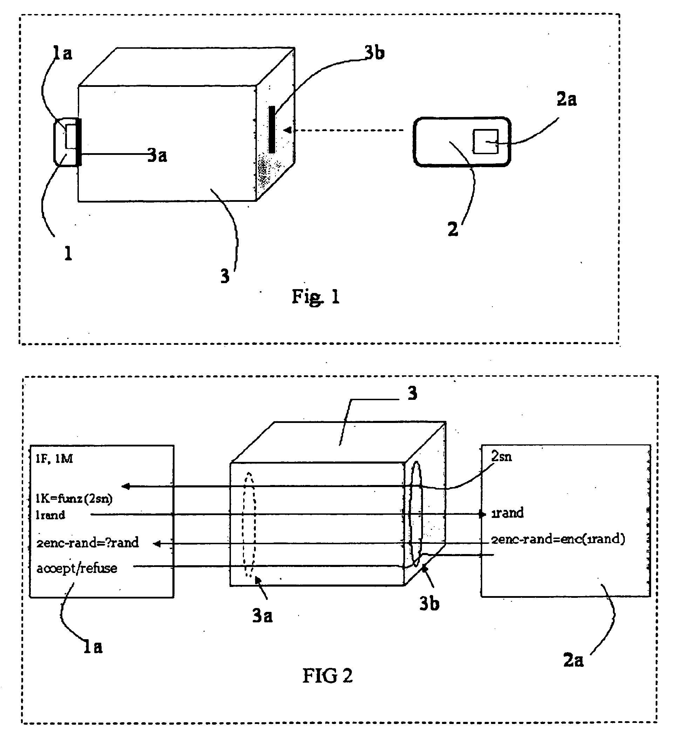

In a banking application in fact, as schematically shown in figure 1, a POS terminal 3 connects a first SAM IC Card 1 and a second User IC Card 2, for example respectively through a first slot 3a and a second slot 3b provided by the POS terminal 3 itself.

The first SAM IC Card 1 comprises at least a first memory unit 1a storing a first plurality of data and the second User IC Card 2 comprises at least a second memory unit 2a including a second plurality of data.

The authentication between the SAM IC card 1 and the User IC Card 2 is generally implemented through a mutual authentication that is briefly described hereinafter.

The first memory unit 1a inside the SAM IC Card 1 holds a Master Key 1M and a Function 1F, the Function 1F being used to derive an additional Key, relating to a User IC card 2 inserted in the second slot 3b of the POS terminal 3.

More particularly, such additional key, hereinafter indicated as Child Unique Keys 1K, is used to implement the mutual authentication between the SAM IC card 1 and the User IC card 2.

The mutual authentication provides that an IC Card identification number, for example an IC Card serial number 2sn generally stored inside the second memory unit 2a of a User IC card 2, is transmitted to the SAM IC card 1.

The Function 1F processes through the Master key 1M and the IC card serial number 2sn, a Child Unique Key 1K to be used to authenticate a corresponding User IC Card 2.

The SAM IC card 1 also generates a Random number 1rand, stores it in the first memory unit 1a and sends it to the User IC card 2. The User IC card 2 read the Random number 1rand through the POS terminal 3, encrypts it and sends it back to the SAM IC card 1 as encrypted random number 2enc-rand.

The SAM IC card 1 may decrypt the encrypted Random number 2enc-rand through the Child Unique Key 1K, corresponding to the User IC Card 2 inserted in the second slot 3b and previously stored inside the first memory unit 1a. The result of such a decryption is compared to the Random number 1rand stored inside the first memory unit 1a of the SAM IC card 1.

If the result of the decryption is equal to the Random number 1rand previously stored, the SAM IC card 1 authenticates the User IC card 2; else the SAM IC card 1 rejects the User IC card 2.

More particularly, if the SAM IC card 1 authenticates the User IC card 2, a reverse authentication, called from the User IC card 2 and intended to authenticate the SAM IC card 1, is performed. The reverse authentication substantially comprises all the computations described above to authenticate the User IC card 2.

As described above, the mutual authentication comprises a lot of communications between the SAM IC card 1 and the User IC card 2, in particular each communication being intended to send an initialisation message of the mutual authentication between the two IC card 1, 2, an IC Card serial number 2sn from the User IC 2 to the SAM IC card 1, a random number 1rand from the SAM IC Card 1 to the User IC card 2, an encrypted Random number 2enc-rand from the User IC card 2 to the SAM IC card 1, an acknowledge or a non acknowledge message from the SAM IC card 1 to the User IC card 2, respectively intended to start or to refuse the following communication between the two IC cards.

Moreover, when the authentication from the SAM IC card 1 to the User IC card 2 is completed, a mutual authentication from the User IC card 2 to the SAM IC card 1, comprising a corresponding plurality of communications, must be performed.

When a communication between the SAM 1 and a User IC card 2 is terminated, a new communication between another User IC card 2 and the SAM IC card 1 may start: the Function 1F process another Child Unique Key 1K through the Master key 1M and through another IC card serial number 2sn stored inside the User IC card 2 and an authentication is processed.

A considerable number of interaction between the SAM 1 and the User IC card 2 makes the authentication time consuming thus reducing the throughput of the POS terminal 3 and limiting the number of services rendered to the corresponding User IC card 2.

At the same time, more the number of communications between the SAM 1 and the User IC card 2 are, more dangerous is the mutual authentication, each communication being exposed to a potential external attack intended to intercept data.

Also, more the single operations involved in the mutual authentication is expensive, more the amount of time required by the global mutual authentication increases.

In other words, the authentication between a master IC card 1 and a User IC card 2 exposes the secure data stored inside the corresponding memory units to potential risks, due to the time required to complete the mutual authentication and in particular to the time required by the single operations involved in such a mutual authentication, as well as to the number of interchanges required by the authentication itself, so reducing the throughput of the terminal that sequentially interconnects a plurality of user IC card with the same master IC card.

The document "Handbook of Applied Cryptography", by MENEZES, OORSCHOT and VANSTONE; CRC PRESS SERIES ON DISCRETE MATHEMATICS AND ITS APPLICATIONS, 1997; pages 497-499, 567-569, 551-552; XP002454821; BOCA RATON, FL, US; ISBN: 0-8493-8523-7 discloses the principles of a cryptographic session key derivation protocol between two parties, wherein one of the parties stores a master key while the other party stores a key-encryption key. The master key allows the first party to generate the key-encryption key held by the second party. Both parties use the key-encryption key, combined with a first random number, to derive a first cryptographic session key. Still a second random number is used and combined with the key-encryption key to generate a second session key.

The problem at the basis of the present invention is that of providing a method for session key derivation in a IC card able to reduce the time required by a mutual authentication with a corresponding master IC card, at the same time capable to guarantee at least the same level of security provided by the prior art method, executing non-time consuming and non-computational intensive operations and overcoming all the above-mentioned drawbacks connected to the

prior art.

Summary of the invention

The solution idea on which the present invention is based, is that of providing a method for key session derivation in a mutual authentication between a master IC Card and a User IC Card, the method processing a master key stored in the master IC Card and a key-seed associated to the User IC Card to derive a session key with non expensive computational operations, supported by a common hardware included in such IC Cards.

More particularly, the method comprises:

- the generation of at least a first random number associated to the User IC Card;

- the derivation of at least a first and a second sub keys from the key-seed;

- the derivation of at least a first and a second session sub keys, through the first sub key and the first random number;

- the generation of the session key through the session sub keys.

This problem is solved, according to the present invention, by method for deriving session key as previously indicated and defined by the characterising portion of the enclosed claim 1.

Further characteristics and the advantages of the method for deriving session key according to the present invention will be apparent from the following description of an embodiment thereof, made with reference to the annexed drawings, given for indicative and non-limiting purpose.

Brief Description of the drawing

Figure 1: schematically shows a POS terminal interconnecting a User IC card with a SAM IC Card, according to the prior art.

Figure 2: schematically shows a sequence of steps representing some operations to be processed during a mutual authentication between a User IC card and a SAM IC card, according to the prior art.

Figure 3: schematically shows a sequence of computation involved in a session key derivation during a mutual authentication, according to the present invention.

Detailed description

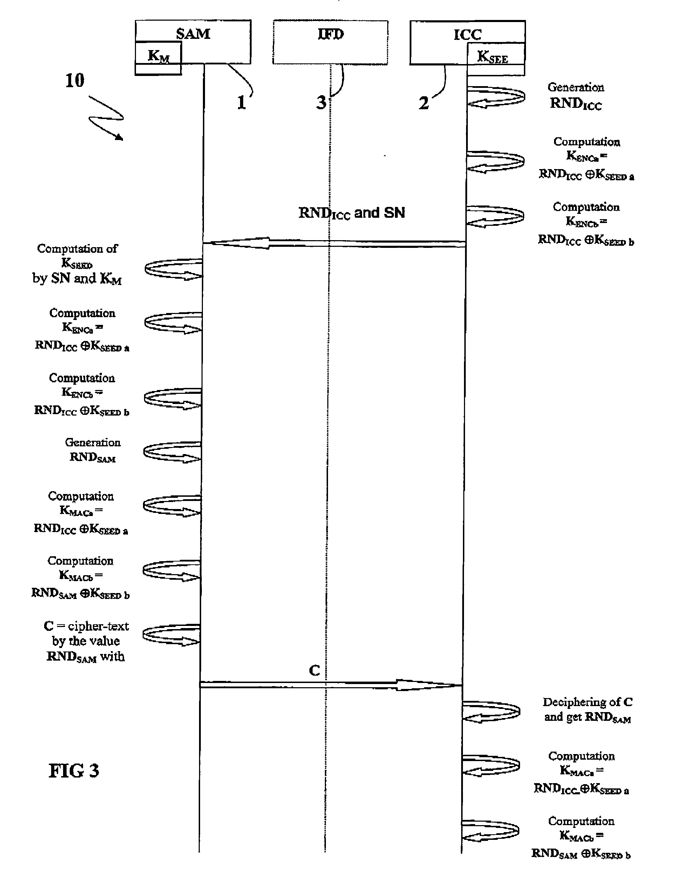

With more specific reference to figure 3 a sequence of computations and communication between a SAM IC Card 1 and a User IC Card 2, involved in a mutual authentication, are schematically represented and globally indicated with numeral reference 10.

More particularly, the SAM IC Card 1 and the User IC Card 2 are interconnected through an interface IFD 3, included in a terminal, for a communication session intended for example to exchange data.

A method for a session key derivation is involved in the mutual authentication between the SAM IC Card 1 and the User IC Card 2, in order to derive a couple of keys, depending from the current communication session, to protect sensitive data flow exchanged between such SAM IC Card 1 and such user card 2.

According to the present invention, the method for session key derivation provides data input to derive session keys corresponding to said communication session.

More particularly, the data input comprises a key-seed stored inside the User IC Card 2, hereinafter also indicated as $K_{SEED}$.

$K_{SEED}$ may for example be a 16-bytes long key.

Each User IC Card 2 stores a different key-seed $K_{SEED}$. A value for key-seed depends on a Key Master $K_M$ loaded inside the SAM IC Card 1 and on a serial number ICC.SN associated to the User IC Card 2.

In other words a value for $K_{SEED}$ is computed through an elaboration of the serial number ICC.SN and $K_M$.

More particularly, the key $K_{SEED}$ is computed and then stored into the user card 2 at Personalization time and it is computed by the SAM IC Card 1 during a mutual authentication, in order to derive a session key for the communication session.

The data input according to the method of the present invention, also comprises a couple of random numbers RNDicc and $RND_{SAM}$, respectively generated by the User IC Card 2 and by the SAM IC Card 1.

RNDicc and $RND_{SAM}$ may for example be two 8-bytes long random numbers generated and exchanged during a mutual authentication as to mutual authenticate the User IC Card 2 and the SAM IC Card 1.

More particularly, the method for key session derivation comprises the following phases:

- split the key-seed $K_{SEED}$ in two keys $K_{SEEDa}$ and $K_{SEEDb}$.
  For example each of such $K_{SEEDa}$ and $K_{SEEDb}$ may be 8-bytes long. More generally, given a generic key $K_{XXX}$, $K_{XXXa}$ indicates the most significant 8-bytes of Kxxx and $K_{XXXb}$ its last significant 8-bytes.

- derive a couple of keys, $K_{ENCa}$ and $K_{ENCb}$, for example through a XOR operation respectively between $K_{SEEDa}$ and RNDicc and between $K_{SEEDb}$ and

$RND_{ICC}$.

- derive a couple of keys, $K_{MACa}$ and $K_{MACb}$, for example through a XOR operation respectively between $K_{SEEDa}$ and $RND_{ICC}$ and between $K_{SEEDb}$ and $RND_{SAM}$.

Hereinafter A XOR operation is also referred with the symbol $\oplus$.

The key $K_{ENC}$ and $K_{MAC}$, also indicated as session key, are used to encipher a given data and to perform the mutual authentication on the given data. Both $K_{ENC}$ and $K_{MAC}$ may be considered 16-bytes long keys.

More particularly, $K_{SEED}$, that is composed of two sub part $K_{SEEDa}$ and $K_{SEEDb}$ is used to derive respectively:

$$K_{ENCa} = RND_{ICC} \oplus K_{SEEDa}$$

and

$$K_{ENCb} = RND_{ICC} \oplus K_{SEEDb}$$

As instance, $K_{ENCa}$ is obtained by a XOR operation between $RND_{ICC}$ and $K_{SEEDa}$ and $K_{ENCb}$ is obtained by a corresponding XOR operation between $RND_{ICC} \oplus K_{SEEDb}$.

The parity bits in $K_{ENCa}$ and $K_{ENCb}$ are adjusted and $K_{ENC}$ is calculated by the concatenation of $K_{ENCa}$ and $K_{ENCb}$, obtaining $K_{ENC} = K_{ENCa} || K_{ENCb}$.

In a similar way $K_{MACa}$ and $K_{MACb}$ are calculated:

$$K_{MACa} = RND_{ICC} \oplus K_{SEEDa}$$

and

$$K_{MACa} = RND_{SAM} \oplus K_{SEEDb}$$

Also the parity bits in $K_{MACa}$ and $K_{MACa}$ are adjusted so to calculate $K_{MAC} = K_{MACa} || K_{MACa}$, as previously described with reference to $K_{ENC}$.

Advantageously, the method for session key derivation according to the present invention derives through few steps of computation, based on non expensive and simple operations, the session secret keys for mutual authentication between the SAM IC Card 1 and the user card 2, without lack of security, even when the user card 2 and/or the SAM IC Card 1 are not provided with especial hardware to support computation intensive operation.

Advantageously, few computational steps are performed to derive the session keys, such steps all based on no computational intensive operations such as XOR operations, which assure the requirement of efficiency.

The method for session key derivation is based on a secret key-seed $K_{SEED}$ stored in a User IC Card that is unknown externally the User IC Card for assuring a security requirement.

Advantageously, the method for deriving session keys provides the session keys $K_{ENC}$ to a user cards 2 involved in a communication with a SAM IC Card 1, non only decreasing the time required to derive such session keys with few steps of computations, but also deriving, through the same few step of computation, a session key $K_{MAC}$ for the SAM IC Card 1.

**Claims**

1. Method for key session derivation during a mutual authentication between a master IC Card (1), storing a master key ($K_M$). and a User IC Card (2), storing a key-seed ($K_{SEED}$), said master IC Card (1) and said User IC Card (2) being connected through a communication interface (ITF) for a communication session, the method comprising the steps of:

   - generating at least a first random number (RND.ICC) in said User IC Card (2) and a second random number (RND.SAM) in said master IC Card (1);
   - transmitting said first random number (RND.ICC) from the User IC Card (2) to the master IC Card (1);
   - deriving at least a first and a second sub keys ($K_{SEEDa}$, $K_{SEEDb}$) from said key-seed ($K_{SEED}$);
   - deriving at least a first and a second session sub keys ($K_{ENCa}$, $K_{ENCb}$), respectively through said first sub key ($K_{SEEDa}$) in combination with said first random number (RND.ICC) and through said second sub key ($K_{SEEDb}$) in combination with said first random number (RND.ICC), in said master IC Card (1) and said User IC Card (2) and concatenating said at least first and second session sub keys ($K_{ENCa}$, $K_{ENCb}$) in at least a session key ($K_{ENC}$) for said communication session;
   - encrypting said second random number (RND.SAM) in said master IC Card (1), transmitting it to the User IC Card (2), and decrypting said second random number (RND.SAM) in said User IC Card (2);
   - deriving a third and a fourth session sub keys ($K_{MACa}$, $K_{MACb}$) in said master IC Card (1) and in said User IC Card (2), obtained respectively through said first sub key ($K_{SEEDa}$) in combination with said first random number (RND.ICC) and through said second sub key ($K_{SEEDb}$) in combination with said second random number (RND.SAM).

2. Method according to claim 1 **characterized by** the fact that said step of concatenating said at least first and second session sub keys ($K_{ENCa}$, $K_{ENCb}$) comprises the processing of said third and fourth session sub keys ($K_{MACa}$, $K_{MACb}$) in a corresponding second session key ($K_{MAC}$) for said communication session.

3. Method according to claim 2 **characterized by** the fact that said step of deriving said session sub keys ($K_{ENCa}$, $K_{ENCb}$, $K_{MACa}$, $K_{MACb}$) comprises a XOR operation between said first and second sub keys ($K_{SEEDa}$, $K_{SEEDb}$) and said first and second random numbers (RND.ICC, RND.SAM).

4. IC Card storing a key-seed ($K_{SEED}$) intended to be used in a communication session with a master IC Card (1), said IC Card being connectable to said master IC Card through an interface of communication (ITF), **characterized by** comprising means for

   - generating at least a first random number (RND.ICC);
   - deriving at least a first and a second sub keys ($K_{SEEDa}$, $K_{SEEDb}$) associated to said key-seed ($K_{SEED}$);
   - deriving at least a first and a second session sub keys ($K_{ENCa}$, $K_{ENCb}$), respectively through said first sub key ($K_{SEEDa}$) in combination with said first random number (RND.ICC) and through said second sub key ($K_{SEEDb}$) in combination with said first random number (RND.ICC).
   - concatenating said at least first and second session sub keys ($K_{ENCa}$) and ($K_{ENCb}$) in at least a session key ($K_{ENC}$) for said communication session, transmitting said first random number (RND.ICC) to the master IC Card (1) and receiving a second encrypted random number (RND.SAM);
   - decrypting said second random number (RND.SAM);
   - deriving a third and a fourth session sub keys ($K_{MACa}$, $K_{MACb}$) obtained respectively through said first sub key ($K_{SEEDa}$) in combination with said first random number (RND.ICC) and through said second sub key ($K_{SEEDb}$) in combination with said second random number (RND.SAM).

**Patentansprüche**

1. Verfahren zur Ableitung eines Sitzungsschlüssels während einer gegenseitigen Authentifizierung zwischen einer Haupt-IC-Karte (1), die einen Hauptschlüssel ($K_M$) speichert, und einer Benutzer-IC-Karte (2), die einen Schlüsselkeim ($K_{SEED}$) speichert, wobei die Haupt-IC-Karte (1) sowie die Benutzer-IC-Karte (2) über ein Kommunikationsinterface für eine Kommunikationssitzung miteinander verbunden sind, wobei das Verfahren folgende Schritte aufweist:

    - Erzeugen mindestens einer ersten Zufallszahl (RND.ICC) in der Benutzer-IC-Karte (2) und einer zweiten Zufallszahl (RND.SAM) in der Haupt-IC-Karte (1) ;
    - Übertragen der ersten Zufallszahl (RND.ICC) aus der Benutzer-IC-Karte (2) an die Haupt-IC-Karte (1) ;
    - Ableiten mindestens eines ersten und eines zweiten Subschlüssels ($K_{SEEDa}$, $K_{SEEDb}$) aus dem Schlüsselkeim ($K_{SEED}$) ;
    - Ableiten mindestens eines ersten und eines zweiten Sitzungs-Subschlüssels ($K_{ENCa}$, $K_{ENCb}$) aus dem ersten Subschlüssel ($K_{SEEDa}$) in Kombination mit der ersten Zufallszahl (RND.ICC) beziehungsweise aus dem zweiten Subschlüssel ($K_{SEEDb}$) in Kombination mit der ersten Zufallszahl (RND.ICC) in der Haupt-IC-Karte (1) und der Benutzer-IC-Karte (2), und Aneinanderhängen des ersten und des zweiten Sitzungs-Subschlüssels ($K_{ENCa}$, $K_{ENCb}$) zu mindestens einem Sitzungsschlüssel ($K_{ENC}$) für die Kommunikationssitzung;
    - Verschlüsseln der zweiten Zufallszahl (RND.SAM) in der Haupt-IC-Karte (1), Übertragen derselben an die Benutzer-IC-Karte (2) und Entschlüsseln der zweiten Zufallszahl (RND.SAM) in der Benutzer-IC-Karte (2) ;
    - Ableiten eines dritten und eines vierten Sitzungs-Subschlüssels ($K_{MACa}$, $K_{MACb}$) in der Haupt-IC-Karte (1) und in der Benutzer-IC-Karte (2), erzielt aus dem ersten Subschlüssel ($K_{SEEDa}$) in Kombination mit der ersten Zufallszahl (RND.ICC) beziehungsweise aus dem zweiten Subschlüssel ($K_{SEEDb}$) in Kombination mit der zweiten Zufallszahl (RND.SAM).

**2.** Verfahren nach Anspruch 1, **dadurch gekennzeichnet, dass** der Schritt des Zusammenführens des mindestens ersten mit dem mindestens zweiten Sitzungs-Subschlüssel ($K_{ENCa}$, $K_{ENCb}$) das Verarbeiten des dritten und vierten Sitzungs-Subschlüssels ($K_{MACa}$, $K_{MACb}$) zu einem entsprechendem zweiten Sitzungsschlüssel ($K_{MAC}$) für die Kommunikationssitzung beinhaltet.

**3.** Verfahren nach Anspruch 2, **dadurch gekennzeichnet, dass** der Schritt des Ableitens der Sitzungs-Subschlüssel ($K_{ENCa}$, $K_{ENCb}$, $K_{MACa}$, $K_{MACb}$) eine XOR-Operation zwischen dem ersten und dem zweiten Subschlüssel ($K_{SEEDa}$, $K_{SEEDb}$) sowie der ersten und der zweiten Zufallszahl (RND. ICC, RND. SAM) beinhaltet.

**4.** IC-Karte, die einen zur Verwendung in einer Kommunikationssitzung mit einer Haupt-IC-Karte (1) vorgesehenen Schlüsselkeim ($K_{SEED}$) speichert, wobei die IC-Karte über ein Kommunikationsinterface (ITF) mit der Haupt-IC-Karte verbindbar ist, **gekennzeichnet durch** Einrichtungen zum:

    - Erzeugen mindestens einer ersten Zufallszahl (RND.ICC) ;
    - Ableiten mindestens eines ersten und eines zweiten Sub-Schlüssels ($K_{SEEDa}$, $K_{SEEDb}$), die mit dem Schlüsselkeim ($K_{SEED}$) verknüpft sind;
    - Ableiten von mindestens einem ersten und einem zweiten Sitzungs-subschlüssel ($K_{ENCa}$, $K_{ENCb}$) aus dem ersten Subschlüssel ($K_{SEEDa}$) in Kombination mit der ersten Zufallszahl (RND.ICC) beziehungsweise aus dem zweiten Subschlüssel ($K_{SEEDb}$) in Kombination mit der ersten Zufallszahl (RND.ICC) ;
    - Aneinanderhängen des mindestens ersten und des mindestens zweiten Sitzungssubschlüssels ($K_{ENCa}$) und ($K_{ENCb}$) zu mindestens einem Sitzungsschlüssel ($K_{ENC}$) für die Kommunikationssitzung, Übertragen der ersten Zufallszahl (RND.ICC) an die Haupt-IC-Karte (1) und Entgegennehmen einer zweiten verschlüsselten Zufallszahl (RND.SAM) ;
    - Entschlüsseln der zweiten Zufallszahl (RND.SAM) ;
    - Ableiten eines dritten und eines vierten Sitzungssubschlüssels ($K_{MACa}$, $K_{MACb}$), die aus dem ersten Subschlüssel ($K_{SEEDa}$) in Kombination mit der ersten Zufallszahl (RND.ICC) beziehungsweise aus dem zweiten Subschlüssel ($K_{SEEDb}$) in Kombination mit der zweiten Zufallszahl (RND.SAM) erzielt wurden.

**Revendications**

**1.** Procédé de dérivation une clé de session durant une authentification mutuelle entre une carte à circuit intégré maître (1), stockant une clé maître ($K_M$), et une carte à circuit intégré d'utilisateur (2), stockant une valeur initiale de clé ($K_{SEED}$), ladite carte à circuit intégré maître (1) et ladite carte à circuit intégré d'utilisateur (2) étant connectées à travers une interface de communication (IFT) pour une session de communication, le procédé comprenant les étapes suivantes :

    - la génération d'au moins un premier nombre aléatoire (RND.ICC) dans ladite carte à circuit intégré d'utilisateur (2) et un deuxième nombre aléatoire (RND.SAM) dans ladite carte à circuit intégré maître (1) ;

- la transmission dudit premier nombre aléatoire (RND.ICC) de la carte à circuit intégré d'utilisateur (2) à la carte à circuit intégré maître (1) ;

- la dérivation d'au moins une première et une deuxième sous-clés ($K_{SEEDa}$, $K_{SEEDb}$) à partir de ladite valeur initiale de clé ($K_{SEED}$) ;

- la dérivation d'au moins une première et une deuxième sous-clés de session ($K_{ENCa}$, $K_{ENCb}$), respectivement par le biais de ladite première sous-clé ($K_{SEEDa}$) en combinaison avec ledit premier nombre aléatoire (RND.ICC) et par le biais de ladite deuxième sous-clé ($K_{SEEDb}$) en combinaison avec ledit premier nombre aléatoire (RND.ICC), dans ladite carte à circuit intégré maître (1) et ladite carte à circuit intégré d'utilisateur (2) et la concaténation desdites au moins première et deuxième sous-clés de session ($K_{ENCa}$, $K_{ENCb}$) en au moins une clé de session ($K_{ENC}$) pour ladite session de communication ;

- le chiffrement dudit deuxième nombre aléatoire (RND.SAM) dans ladite carte à circuit intégré maître (1), sa transmission à la carte à circuit intégré d'utilisateur (2), et le déchiffrement dudit deuxième nombre aléatoire (RND.SAM) dans ladite carte à circuit intégré d'utilisateur (2) ;

- la dérivation d'une troisième et d'une quatrième sous-clés de session ($K_{MACa}$, $K_{MACb}$) dans ladite carte à circuit intégré maître (1) et dans ladite carte à circuit intégré d'utilisateur (2), obtenues respectivement par le biais de ladite première sous-clé ($K_{SEEDa}$) en combinaison avec ledit premier nombre aléatoire (RND.ICC) et par le biais de ladite deuxième sous-clé ($K_{SEEDb}$) en combinaison avec ledit deuxième nombre aléatoire (RND.SAM).

**2.** Procédé selon la revendication 1, **caractérisé en ce que** ladite étape de concaténation desdites au moins une première et une deuxième sous-clés de session ($K_{ENCa}$, $K_{ENCb}$) comprend le traitement desdites troisième et quatrième sous-clés de session ($K_{MACa}$, $K_{MACb}$) en une deuxième clé de session ($K_{MAC}$) correspondante pour ladite session de communication.

**3.** Procédé selon la revendication 2, **caractérisé en ce que** ladite étape de dérivation desdites sous-clés de session ($K_{ENCa}$, $K_{ENCb}$, $K_{MACa}$, $K_{MACb}$) comprend une opération OU EXCLUSIF entre lesdites première et deuxième sous-clés ($K_{SEEDa}$, $K_{SEEDb}$) et lesdits premier et deuxième nombres aléatoires (RND.ICC, RND.SAM).

**4.** Carte à circuit intégré stockant une valeur initiale de clé ($K_{SEED}$) destinée à être utilisée dans une session de communication avec une carte à circuit intégré maître (1), ladite carte à circuit intégré pouvant être connectée à ladite carte à circuit intégré maître à travers une interface de communication (IFT), **caractérisée en ce qu'**elle comprend des moyens pour

- la génération d'au moins un premier nombre aléatoire (RND.ICC) ;

- la dérivation d'au moins une première et une deuxième sous-clés ($K_{SEEDa}$, $K_{SEEDb}$) associées à ladite valeur initiale de clé ($K_{SEED}$) ;

- la dérivation d'au moins une première et une deuxième sous-clés de session ($K_{ENCa}$, $K_{ENCb}$), respectivement par le biais de ladite première sous-clé ($K_{SEEDa}$) en combinaison avec ledit premier nombre aléatoire (RND.ICC) et par le biais de ladite deuxième sous-clé ($K_{SEEDb}$) en combinaison avec ledit premier nombre aléatoire (RND.ICC) ;

- la concaténation desdites au moins une première et une deuxième sous-clés de session ($K_{ENCa}$) et ($K_{ENCb}$) en au moins une clé de session ($K_{ENC}$) pour ladite session de communication, la transmission dudit premier nombre aléatoire (RND.ICC) à la carte à circuit intégré maître (1) et la réception d'un deuxième nombre aléatoire chiffré (RND.SAM) ;

- le déchiffrement dudit deuxième nombre aléatoire (RND.SAM) ;

- la dérivation d'une troisième et d'une quatrième sous-clés de session ($K_{MACa}$, $K_{MACb}$) obtenues respectivement par le biais de ladite première sous-clé ($K_{SEEDa}$) en combinaison avec ledit premier nombre aléatoire (RND.ICC) et par le biais de ladite deuxième sous-clé ($K_{SEEDb}$) en combinaison avec ledit deuxième nombre aléatoire (RND.SAM).

Fig. 1

1F, 1M

1K=funz(2sn)
1rand

2enc-rand=?rand

accept/refuse

2sn

1rand

2enc-rand=enc(1rand)

FIG 2

**FIG 3**

SAM | IFD | ICC

$K_M$ | | $K_{SEE}$

10

1 3 2

Generation $RND_{ICC}$

Computation $K_{ENCa} = RND_{ICC} \oplus K_{SEED\ a}$

RND$_{ICC}$ and SN

Computation $K_{ENCb} = RND_{ICC} \oplus K_{SEED\ b}$

Computation of $K_{SEED}$ by SN and $K_M$

Computation $K_{ENCa} = RND_{ICC} \oplus K_{SEED\ a}$

Computation $K_{ENCb} = RND_{ICC} \oplus K_{SEED\ b}$

Generation $RND_{SAM}$

Computation $K_{MACa} = RND_{ICC} \oplus K_{SEED\ a}$

Computation $K_{MACb} = RND_{SAM} \oplus K_{SEED\ b}$

C = cipher-text by the value $RND_{SAM}$ with

C

Deciphering of C and get $RND_{SAM}$

Computation $K_{MACa} = RND_{ICC} \oplus K_{SEED\ a}$

Computation $K_{MACb} = RND_{SAM} \oplus K_{SEED\ b}$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Handbook of Applied Cryptography. **MENEZES ; OORSCHOT ; VANSTONE.** CRC PRESS SERIES ON DISCRETE MATHEMATICS AND ITS APPLICATIONS. 1997, 497-499567-569551-552